# EUROPEAN PATENT SPECIFICATION

(11) **EP 4 573 863 B1**
(45) Date of publication and mention of the grant of the patent: **14.10.2026**
(21) Application number: 23217913.5
(22) Date of filing: 19.12.2023
(51) Int. Cl.: A01B 59/00, B62D 49/06, B60D 1/00

(54) **IMPROVEMENTS FOR DIAGNOSTICS OF POWER TAKE-OFF SPEED SENSORS**
VERBESSERUNGEN ZUR DIAGNOSE VON ZAPFWELLENGESCHWINDIGKEITSSENSOREN
AMÉLIORATIONS POUR LE DIAGNOSTIC DE CAPTEURS DE VITESSE À PRISE DE FORCE

(43) Date of publication of application: 25.06.2025
(73) Proprietor: CNH Industrial Belgium N.V., 8210 Zedelgem (BE)
(72) Inventor: LOOSFELT, Yves, 8210 Zedelgem (BE); DERYNCK, Lynn, 8210 Zedelgem (BE); BONTE, Xavier, 8210 Zedelgem (BE)
(74) Representative: CNH Industrial IP Department

(56) References cited:
- CN-A- 113 203 876
- CN-A- 113 650 496
- US-A- 5 113 821

## Description

Agricultural systems use well-known universal machinery for carrying out agricultural work tasks. They may also be used for constructional work tasks. For these tasks, the agricultural systems may comprise specialized implements which can be coupled to an agricultural vehicle such as a tractor or a work vehicle, particularly at its rear end. To enable a wide range of functionality for the implement, the power of the engine of the vehicle is usually transmitted to the implement via a power take-off or PTO.

In most modern agricultural systems, the PTO is driven by a driveline of said agricultural vehicle, especially by a mid-gear box rotatably coupled to the driveline. For enhanced functionality, the driveline comprises a PTO speed sensor communicatively coupled to a control unit of the work vehicle enabling the control unit to monitor and control the rotational speed of the PTO in order to meet rotational speed and power requirements for driving the implement. Currently, there exist several problems in cases where, for example, the PTO speed sensor fails or when erroneous PTO speed sensor signals are transmitted to the control unit.

When such errors occur, the power transmission towards the implement must be disengaged as the rotational speed of the PTO cannot accurately be controlled by the control unit to prevent the drivetrain driving the PTO from being damaged. In these situations, the power transmission is stopped and the work task to be carried out comes to an immediate halt, thus possibly resulting in a financial loss for the contractor of the work task. Also, unfavourable conditions of the implement may be the consequence since it cannot be driven empty, unloaded or shut down.

Methods and systems for dealing with sensor malfunctioning in rotating components are for example known from US 5 113 821 A for speed control of a road vehicle, from CN 113 650 496 A for a differential steering system of an agricultural tractor and from CN 113 203 876 A for determining a fault of a power take-off in the context of pumps.

It is therefore the object of the present invention to provide a method for operating an agricultural system and an agricultural system which overcome at least one of the above mentioned drawbacks in the situation of a failure of the PTO speed sensor or when erroneous PTO speed sensor signals are transmitted to the control unit within the agricultural system.

This object is solved by the subject-matter of claim 1 of the present invention. Advantageous and exemplary embodiments of the present invention are described in the dependent claims.

According to the invention, a method for operating an agricultural system is provided, the agricultural system having a first rotating component having a first speed sensor, a second rotating component having a second speed sensor, a control unit coupled with the first speed sensor and the second speed sensor and having a user interface for an operator, wherein the method comprises the steps of:
- monitoring measurements of the first speed sensor,
- in response to detecting a malfunctioning of the first speed sensor, taking a measurement of the second speed sensor, and
- using the measurement of the second speed sensor to derive measurements that approximate the measurements that the first speed sensor would generate,
wherein after detecting a malfunctioning of the first speed sensor, the operator on the user interface is given the selection of continuing with operating the agricultural system with restricted functionality or of ceasing the operation of the agricultural system.

By applying this method, it is ensured that, for example, in case of a PTO sensor failure in the agricultural system, that the PTO is still operatively turning and thereby transmitting power to an implement of the agricultural system, so that the implement needs not be stopped or the implement can be at least driven empty, unloaded or shut down.

The selection of continuing with operating the agricultural system with restricted functionality or of ceasing the operation of the agricultural system will only be presented to the operator after a malfunctioning of the first speed sensor has been detected. The method is continued if the operator selects between one of the two presented options. Optionally, if the operator does not select between the two presented options, the operation of the agricultural system will be automatically paused.

In the terms of the present invention, a limited functionality can be defined as a less accurate detection of slip or no observation of minor critical components between the first and second component, for example a less accurate detection of slip in a mid-gearbox of an agricultural vehicle or no observation of a shear bolt condition of a knotter. Additionally, limited functionality can be defined as restriction on availability of functions of the agricultural system, for example an engagement or disengagement of an engagement means, like a clutch, might not work optimally or be available. Further, limited functionality can be defined in that the second rotating element, for example the PTO, may not start and/or stop its rotational movement in an optimal predetermined start/stop position which may cause unfavourable start/stop positions of a driven implement.

In preferred embodiments, the agricultural system comprises an agricultural vehicle and/or implement. An agricultural vehicle preferably comprises an internal combustion engine or an alternative engine such as an electric motor as a power source. The first and second rotating components may be of any known drivetrain type, preferably at least a partly mechanical drivetrain. Preferably, the first or second rotating components may be comprised within one or more units of the agricultural system, e.g. within an agricultural vehicle and/or within an implement, driven by the agricultural vehicle. Even more preferably, the first rotating component is comprised within a mid-gearbox of the agricultural vehicle, but not limited thereto.

In embodiments, the control unit may be connected to the first and second speed sensors by a communication network that is arranged within the agricultural system. The communication network may be wired, wireless or both. The first and second speed sensors preferably transmit measurements in predetermined timeframes or upon request to the control unit during operation of the agricultural system.

In further preferred embodiments, the first rotating component may be arranged upstream of the second rotating component in a drivetrain of the agricultural system, wherein the first rotating component and the second rotating component are rotatably operatively connected to each other. In another preferred embodiments, the first rotating component may be arranged downstream of the second rotating component in the drivetrain of the agricultural system. Optionally, the agricultural system may comprise multiple first and multiple second rotating components and speed sensor respectively.

Upstream and downstream in this context means that power is transmitted from a power source which is located most upstream in a chain of devices in a drivetrain to a component located downstream in the chain of devices.

In the case, where the first rotating component and the second rotating component are rotatably connected, it is possible to detect whether the drivetrain is capable of transmitting power from its upstream to its downstream side. Hence, it is further possible to locate any major damage or excessive wear along the drivetrain in a very short time, which helps to prevent subsequent damages.

The first or second rotating components can be, for example, one of the list comprised of a shaft, a shear bolt, a clutch, a clutch component, a transmission gear of a transmission, a roller, a pump impeller, and a conveyor roller. Generally, the first and/or second rotating components may be components that are comprised within the drivetrain enabling a transmission of power from an upstream side to a downstream side of the drivetrain. Additionally, or alternatively, the first and/or second components may be components that are driven by the drivetrain as a part thereof, for example a shaft of a hydraulic pump driven by the drivetrain. This enables a very flexible positioning of the sensors or a use of already existing sensors of the agricultural system to determine rotational speeds and operative rotational connections of first and second components within the drivetrain.

In a preferred embodiment, the second sensor may be a knotter speed sensor of a knotter system of a baler, wherein the second rotating component is most preferably a component of the knotter system that is rotatably driven by the drivetrain of the agricultural system.

The speed sensors may be of any known type of sensor capable of measuring a rotary speed, for example an electromagnetic sensor, an eddy current sensor, a hall sensor, a photoelectric sensor, etc. Optionally, further sensors may be communicatively coupled to the control unit that is associated with the agricultural system, e.g. with the engine, the mid gear box, the driveline, or the implement.

A malfunctioning can be defined as failures of said speed sensors or erroneous transmissions of the transmitted sensor signals/data/measurements, for example due to electromagnetic interference or defective cables, plugs, sockets, radio transceivers etc., which are used to transmit said sensor signals to the control unit.

Preferably, a malfunctioning of the first speed sensor is detected if no or no readable sensor signals/data/measurements are transmitted to and received by the control unit for a predetermined period of time.

Preferably, both of the first rotating component and the second rotating component are located onboard of a first unit of the agricultural system. Alternatively, it is possible that the first rotating component is located onboard of the first unit and the second rotating component is located onboard of a second unit of the agricultural system. The inventive method can thus be applied to agricultural systems with multiple units operatively connected with each other by an end-to-end drivetrain.

The control unit may be installed in the agricultural system and may be in a wired or wireless manner communicatively coupled with the speed sensors. Optionally, the control unit of the agricultural system may be comprised of multiple control units, communicatively connected with each other. For example, an implement may comprise a control unit configured to read and monitor the speed readings of at least one speed sensor of the implement. In this example, the implement control unit may be communicatively coupled with an agricultural vehicle control unit to transmit implement sensor speed readings. Preferably, the control unit may be configured to detect which rotary speed sensor has failed. Additionally, the control unit may be further configured to diagnose a failed speed sensor.

In another preferred embodiment, the first unit of the agricultural system is a self-propelled agricultural vehicle, preferably one of a combine harvester, a forage harvester, and a tractor. Alternatively, the agricultural vehicle can be of any type of constructional or work vehicle, in particular a wheel loader, an excavator, a truck, or a comparable constructional vehicle.

The second unit of the agricultural system is preferably an agricultural implement, preferably a baler, a header for a harvesting machine, a slurry or water pump, a winch, a woodchipper or a windrower, operatively coupled and driven by the drivetrain of the first unit. Alternatively, the second unit of the agricultural system is a constructional implement, e.g. a generator, a concrete mixer, a concrete pump, or a stone crusher.

With further advantage, the operator is notified via the user interface in response to detecting a malfunction of the first speed sensor. The user interface preferably is communicatively coupled to the control unit by wire or wirelessly. Preferably, the user interface is a display device configured to indicate at least the malfunctioning of the first speed sensor. Optionally, the user interface may indicate an operatively communicative coupling with the second speed sensor. Alternatively, the user interface may be configured to indicate a communicative coupling with another control unit of the agricultural system, for example when the implement comprising a control unit is attached to the agricultural vehicle. Further optionally, the user interface may be configured to indicate the rotational speed measurements of the first and/or second speed sensors.

The user interface may also comprise an input device, for example at least one button, a joystick or a touch sensitive display that enables the operator to make inputs to the user interface and to the control unit, respectively, in particular to make a selection between presented options.

In another preferred aspect of the invention, the first rotating component and the second rotating component are rotatably engageable and/or disengageable with each other by an engagement means, preferably by a clutch or a shear bolt. Applying the method to engageable components allows also the detection of malfunctioning of the engagement means, which further helps to detect for example excessive wear of the engagement means and to prevent major drivetrain damages of the agricultural system.

Further beneficial is that the operator may be given the selection regarding operating the agricultural system with restricted functionality if the measurements of the second speed sensor indicate that the second rotating component is rotating. This measure ensures that when the operation of the agricultural system is continued, no damage or failure of any components rotatably connecting the first and second rotating components is expected.

Further, operating the agricultural system can be paused after detecting a malfunctioning of the first speed sensor until the operator has selected to continue with operating the agricultural system with restricted functionality. This ensures that the continuation of the operation of the agricultural system is up to the operator. Thus, the operator has sufficient time to inspect the agricultural system before taking the decision to continue its operation.

In some embodiments, it is further beneficial that the powering of the first component and/or second component is automatically stopped or paused until the operator selects to continue with operating the agricultural system.

In another preferred embodiment, the operator is not given the selection regarding operating the agricultural system, if the measurements of the second speed sensor indicate that the second rotating component is not rotating. Thereby, any subsequent damages of the first and/or second rotating components and any components within the driveline therebetween may be prevented.

In embodiments, if the operator has selected to cease the operation of the agricultural system, the first rotating component and the second rotating component may be disengaged from each other by the engagement means.

These above-mentioned particular steps help the operator with provisions related to ceasing and/or continuing the operation of the agricultural system, e.g., for inspection, repairing or decoupling components of the agricultural system.

In other embodiments, if the operator has selected to continue with operating the agricultural system, information in reference to the restricted functionality of the agricultural system is displayed to the operator via the user interface. This information can contain information about limited slip detection of a mid-gear box of the agricultural vehicle or information indicating that one or multiple conditions of rotating components upstream/downstream from the first rotating component to the second rotating component may not be monitored, for example that the condition of a knotter shear bolt of a baller cannot be monitored. Thus, the operator is well informed about the limited functionalities and is able to adapt the operation of the agricultural system according to the limited functionalities.

In other embodiments, the operator of the agricultural system is notified by an acoustic and/or optical signal via the user interface, if a malfunctioning of the first speed sensor is detected. Notifying the operator by a signal leads to an early recognition of the malfunctioning of the first speed sensor, whereas the operator is able to make a prompt decision.

Optionally, the control unit may be configured to transmit a notification to a mobile device of the operator like a cell phone, smart phone, tablet computer, etc., which will emit the acoustic or optical signal, if a malfunctioning of the first speed sensor is detected. Additionally, upon detection of a malfunctioning of the first speed sensor, the user interface may display a warning message indicating the malfunctioning speed sensor and/or instructions to select between continuing with operating the agricultural system with restricted functionality and ceasing the operation of the agricultural system.

With this configuration, the operator can react to a malfunctioning of the first speed sensor within a short timeframe. This is particularly important when the operator is manually operating the agricultural system and even when the agricultural system is performing an operation unsupervised by the operator.

In a further embodiment, the control unit may be configured to approximate and output the rotational speed of the first rotating component by the user interface, for example the PTO speed, based on a predetermined ratio between the rotational speeds of the first rotation component and the second rotating component. Hence, the operator can monitor the rotational speed of the first rotating component manually while continuing with operating the agricultural system with limited functionality.

Next, an agricultural system according to the present invention will be described. It must be noted that the structural elements of the inventive method as well as any described structural or functional elements of the inventive agricultural system can be combined with each other if not otherwise specified.

Also according to the invention is an agricultural system having a first rotating component having a first speed sensor, a second rotating component having a second speed sensor, a control unit coupled with the first speed sensor and the second speed sensor and having a user interface for an operator, wherein the control unit is configured to execute the method steps according to the invention.

Preferred embodiments and advantages of the agricultural system and the method according to the invention will now be described with reference to the attached drawings, in which:
- Fig. 1: is a schematic view of the combination of an agricultural vehicle and an implement according to an embodiment of the present invention; and
- Fig. 2: is a schematic process flow according to the method for operating the agricultural system according to the invention with reference to the embodiment of Fig. 1.

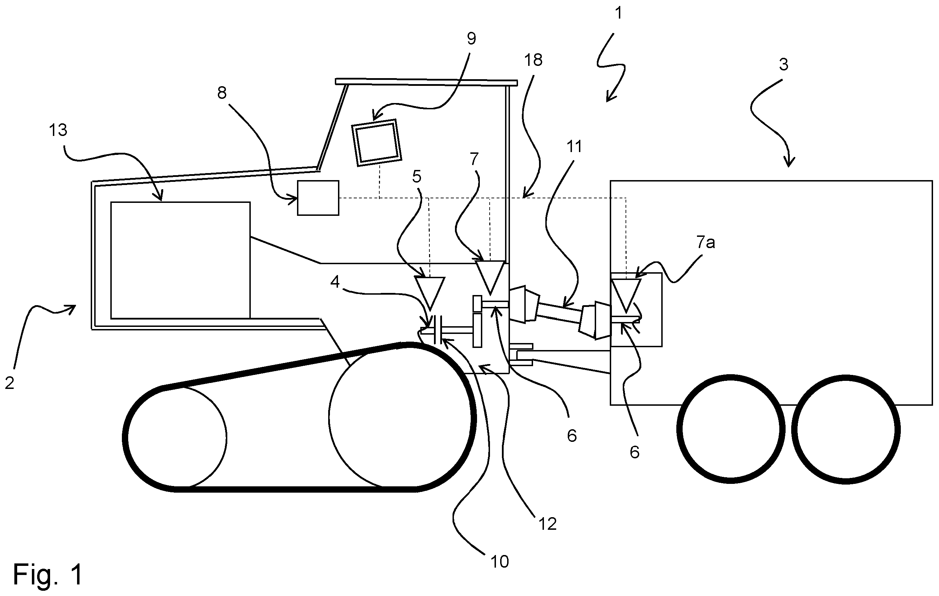

Fig. 1 shows a preferred embodiment of the subject matter of the present invention, namely an agricultural system 1 having as a first unit an agricultural vehicle 2 and as a second unit an implement 3 which is detachably coupled to the agricultural vehicle 2 by a hitch. The implement 3 is provided with wheels so that it can be towed behind the agricultural vehicle 2. Alternatively, the implement 3 can be detachably coupled to the agricultural vehicle 2 and be supported by the work vehicle 2 by a three-point hitch or other connection means.

A power take-off PTO 11 is arranged between the agricultural vehicle 2 and the implement 3 to transmit power from an engine as power source 13 of the agricultural vehicle 2 to the implement 3 which is configured to carry out a specific work task. In this configuration, the implement 2 is a baler having, among others, a knotting functionality performed by a knotter. In another embodiment, the implement can be any type of agricultural or constructional implement, for example a windrower, a slurry or water pump, a harvesting head, a woodchipper, a concrete mixer, a stone crusher, a concrete pump, etc.

The agricultural vehicle 2 includes the power source 13, preferably an internal combustion engine or an electric motor transmitting power through a drivetrain to ground engaging drive means for driving the agricultural vehicle 2 in a direction of travel and selectively to the PTO 11. In this particular embodiment, the agricultural vehicle 2 is a caterpillar tractor.

Optionally, in other embodiments, the agricultural vehicle 2 may be a combine harvester, a forage harvester, a wheel loader, an excavator, a truck and the like. The drivetrain comprises a mid-gearbox 12 that can be selectively engaged by an engagement means 10 to transmit power towards the PTO 11.

In this embodiment, the agricultural vehicle 2 further includes said engagement means 10 which is a clutch being rotatably coupled to the PTO 11. In other embodiments, the engagement means 10 can be a component of a clutch, a shear bolt, or any other shaft or cam that is rotatably coupled or driven by the PTO 11.

Located on the agricultural vehicle 2 is a first speed sensor 5 configured for determining a rotational speed of the first rotating component 4 which is an input shaft of the mid-gear box 12. A second speed sensor 7, in particular a PTO speed sensor, is arranged for determining a rotational speed of the second rotating component 6, in this case the PTO 11.

The agricultural vehicle 2 further comprises a control unit 8 that is communicatively coupled to a user interface 9 which is configured to indicate the rotational speed of the second rotating component 6. The control unit 8 is further communicatively coupled to the first and second speed sensors 5, 7.

In this shown embodiment, the implement 3 comprises a further second speed sensor 7a for determining a rotational speed of a further second rotational component 6a. The further second speed sensor 7 is as well communicatively coupled to the control unit 8.

Although in the shown embodiment the further second speed sensor 7a and the further second rotational component 6a are part of the implement 3, and the first speed sensor 5, the first rotating component 4, the second speed sensor 7 and second rotating component 6 are part of the agricultural vehicle 2, in other embodiments their position may be reversed. In such embodiments the further second speed sensor 7a and the further second rotational component 6a may be part of part of the agricultural vehicle 2 whilst the first speed sensor 5, the first rotating component 4, the second speed sensor 7 and second rotating component 6 may be part of the implement 3.

Returning to the shown embodiment, the first speed sensor 5, the second speed sensor 7 and the further second speed sensor 7a are coupled to the control unit 8 by a communication network 18 schematically shown in Fig. 1 as a dashed line. The communication network 18 is arranged within the agricultural vehicle 2 and is further coupled with the user interface 9. Preferably, the further second speed sensor 7a is wirelessly coupled to the communication network 18.

In a further embodiment, the further second speed sensor 7a can be coupled to the communication network 18 in a wired fashion. In another embodiment, the implement 3 may also comprise its own communication network coupled to the further second speed sensor 7a, wherein the implement communication network and the vehicle communication network 18 may be communicatively coupled by wired or wireless connection.

Additionally, the implement 3 may have a separate implement control unit that is configured to receive and monitor speed measurements of the further second speed sensor 7a or of multiple further second speed sensors 7a and to transmit said speed readings to the work vehicle control unit 8.

The control unit 8 is further configured to detect a malfunctioning of the first speed sensor 5. Upon detection of the malfunctioning of the first speed sensor 5, the control unit 8 is configured to notify the operator of the agricultural vehicle 2 via the user interface 9 by acoustic or optical notification. The control unit 8 may also send a notification to a remote device, like a cell phone, informing the operator about the detection of the malfunctioning.

In the case where a malfunctioning of the first speed sensor 5 is detected, the control unit 8 is further configured to display a selection to the operator on the user interface 9 to allow the operator the selection of continuing with operating the agricultural system 1 with restricted functionality or of ceasing the operation of the agricultural system 1. Additionally, the selection is also displayed on the remote device, wherein the operator can make the decision on the remote device or the user interface 9.

In this shown embodiment, the limited functionality is a less accurate detection of slip in the mid-gearbox 12 or no observation of a shear bolt condition of the knotter comprised within the implement 3. Additionally, the limited functionality can be a restriction on availability of the engagement or disengagement of the engagement means 10, which might not work optimally or be available. Additionally, or alternatively the limited functionality concerns restrictions of functions of the second rotating component the PTO 11, which may not start and/or stop its rotational movement in an optimal predetermined start/stop position. This may lead to unfavourable start/stop positions of the driven implement 3.

The limited functionality depends on the position and function of the first and second rotating components 4, 6, 6a and first and second speed sensors 5, 7, 7a within the drivetrain of the agricultural system 1. In the embodiment of Fig. 1, the first rotating component 4 is upstream of the second and further second rotating components 6, seen from the engine as the power source 13.

In other not shown embodiments, the first rotating component 4 and first speed sensor 5 may be downstream of the second rotating component 6 and second speed sensor 7 or multiple second rotating components 6 and multiple second speed sensors 7. Then, the first rotating component 5 may be the PTO 11 or the PTO output shaft, respectively, whereas the second rotating component 6 may be the PTO input shaft, i.e. opposite to the embodiment of Fig. 1.

Upon detection of a malfunctioning of the first speed sensor 5, operating the agricultural system 1 is paused until the operator has selected to continue with operating the agricultural system 1 with restricted functionality. This ensures that the continuation of the operation of the agricultural system 1 is up to the operator. Thus, the operator has sufficient time to inspect the agricultural system 1 regarding damages before taking the decision to continue its operation.

The user interface 9 comprises an input device, here a touch sensitive display, that enables the operator to select between presented options of continuing operating the agricultural system 1 or ceasing operating the agricultural system 1.

When the operator has selected the option to cease the operation of the agricultural system 1, the first rotating component 4 and the second rotating component 6 are disengaged from each other by the engagement means 10, which enables the operator to decouple the implement 3 from the agricultural vehicle 2.

When the operator has selected the option to continue with operating the agricultural system 1, information in reference to the restricted functionality of the agricultural system is displayed to the operator via the user interface 9. This information can contain information about limited slip detection of the mid-gear box 12 of the agricultural vehicle 2 or information indicating that one or multiple conditions of rotating components upstream or downstream from the first rotating component 4 to the second rotating component 6 may not be monitored. Here, the condition of a knotter shear bolt of a baler may not be monitored. Thus, the operator is well informed about the limited functionalities and is able to adapt the operation of the agricultural system according to the limited functionalities.

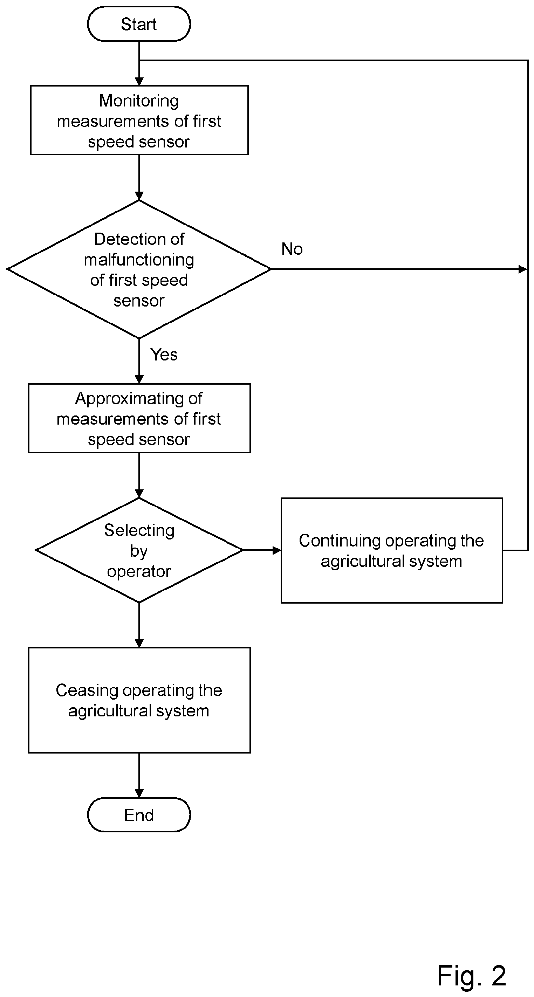

Fig. 2 shows the process flow of a preferred embodiment of the method for an agricultural system comprising according to the embodiment of Fig. 1. The method is performed by the control unit 18 associated with the agricultural vehicle 2.

In the first step, the method comprises monitoring the measurements of the first speed sensor 5. This step is preferably carried out during operation of the agricultural system.

In the next step, the method comprises in response to detecting a malfunctioning of the first speed sensor 5, taking a measurement of the second speed sensor 7. Both the first and second speed sensors 5, 7 regularly transmit measurements in predetermined timeframes to the control unit 18 which evaluates the measurements of both sensors. When the control unit 18 does not receive a measurement of the first speed sensor 5 for a predetermined period, a malfunctioning of the first sensor 5 is determined. Alternatively, if the control unit 18 receives not readable data or measurements over a certain predetermined period, a malfunctioning of the first speed sensor 5 is assumed.

In the subsequent step, if a malfunctioning of the first speed sensor 5 has been detected, using the measurement of the second speed sensor 7 to derive measurements that approximate the measurements that the first speed sensor 5 would generate is carried out by the control unit 18.

Subsequently in the next method step, after detecting a malfunctioning of the first speed sensor 5, the operator on the user interface 9 is given the selection of continuing with operating the agricultural system 1 with restricted functionality or of ceasing the operation of the agricultural system 1.

In the case, where no malfunctioning of the first speed sensor 5 has been detected, the method will return to its first step of monitoring the measurements of the first speed sensor 5.

By applying this method, in the case of a sensor failure of a first speed sensor 5 of a first rotating component 4 of the agricultural system 1, it is ensured that the second rotating component 6 is still operatively turning and thereby transmitting power to the implement 3 of the agricultural system 1, so that the implement 3 needs not be stopped or the implement 3 can be at least driven empty, unloaded or shut down.

It is obvious for the skilled person, that various of embodiments are possible by combining the described embodiments with each other. Further, it must be noted that it is possible to combine any structural or functional elements of the method for operating the agricultural system and the agricultural system itself from the description above to form new embodiments that are not described herein, unless that these newly formed embodiments do not contradict each other from the technical point of view and understanding of the person skilled in the art.

### List of reference numbers:

- 1: agricultural system
- 2: agricultural vehicle/ first unit
- 3: implement/ second unit
- 4: first rotating component
- 5: first speed sensor
- 6: second rotating component
- 6a: further second rotating component
- 7: second speed sensor
- 7a: further second speed sensor
- 8: control unit

- 9: user interface
- 10: engagement means
- 11: power take off PTO
- 12: mid-gearbox
- 13: power source
- 18: communication network

## Claims

1. Method for operating an agricultural system (1), the agricultural system (1) having:
a first rotating component (4) having a first speed sensor (5),
a second rotating component (6) having a second speed sensor (7),
a control unit (8) coupled with the first speed sensor (5) and the second speed sensor (7) and having a user interface (9) for an operator,
the method comprising:
monitoring measurements of the first speed sensor (5),
in response to detecting a malfunctioning of the first speed sensor (5), taking a measurement of the second speed sensor (7), and
using the measurement of the second speed sensor (7) to derive measurements that approximate the measurements that the first speed sensor (5) would generate,
wherein after detecting a malfunctioning of the first speed sensor (5), the operator on the user interface (9) is given the selection of continuing with operating the agricultural system (1) with restricted functionality or of ceasing the operation of the agricultural system (1).

2. Method according to claim 1, wherein the first rotating component (4) is upstream of the second rotating component (6) in a drivetrain of the agricultural system (1), wherein the first rotating component (4) and the second rotating component (6) are rotatably connected to each other.

3. Method according to one of the previous claims, wherein both of the first rotating component (4) and the second rotating component (6) are located onboard of a first unit (2) of the agricultural system (1), or wherein only the first rotating component (4) is located onboard of the first unit (2) and the second rotating component (6) is located onboard of a second unit (3) of the agricultural system (1).

4. Method according to claim 3, wherein the first unit (2) of the agricultural system (1) is a self-propelled agricultural vehicle, preferably one of a combine harvester, a forage harvester and a tractor, and wherein the second unit (3) of the agricultural system (1) is an agricultural implement, preferably a baler, operatively coupled and driven by the first unit (2).

5. Method according to one of the previous claims, wherein the operator is notified via the user interface (9) in response to detecting a malfunction of the first speed sensor (5).

6. Method according to one of the previous claims, wherein the first rotating component (4) and the second rotating component (6) are rotatably engageable and/or disengageable with each other by an engagement means (10), preferably by a clutch or a shear bolt.

7. Method according to one of the previous claims, wherein the operator is given the selection regarding operating the agricultural system (1), if the measurements of the second speed sensor (7) indicate that the second rotating component (6) is rotating.

8. Method according to claim 7, wherein operating the agricultural system (1) is paused after detecting a malfunctioning of the first speed sensor (4) until the operator has selected to continue with operating the agricultural system (1) with restricted functionality.

9. Method according to one of the previous claims, wherein the operator is not given the selection regarding operating the agricultural system (1), if the measurements of the second speed sensor (7) indicate that the second rotating component (6) is not rotating.

10. Method according to one of claims 6 to 9, wherein, if the operator has selected to cease the operation of the agricultural system (1), the first rotating component (4) and the second rotating component (6) are disengaged from each other by the engagement means (10).

11. Method according to one of the previous claims, wherein, if the operator has selected to continue with operating the agricultural system (1), information in reference to the restricted functionality of the agricultural system (1) is displayed to the operator via the user interface (9).

12. Agricultural system (1) having:
a first rotating component (4) having a first speed sensor (5),
a second rotating component (6) having a second speed sensor (7),
a control unit (8) coupled with the first speed sensor (5) and the second speed sensor (7) and having a user interface (9) for an operator,
wherein the control unit (8) is configured to execute the method steps according to any of the previous claims.

## Patentansprüche

1. Verfahren zum Betreiben eines landwirtschaftlichen Systems (1), wobei das landwirtschaftliche System (1) aufweist:
eine erste rotierende Komponente (4) mit einem ersten Drehzahlsensor (5),
eine zweite rotierende Komponente (6) mit einem zweiten Drehzahlsensor (7),
eine Steuereinheit (8), die mit dem ersten Drehzahlsensor (5) und dem zweiten Drehzahlsensor (7) gekoppelt ist und eine Bedienerschnittstelle (9) für einen Bediener aufweist,
das Verfahren umfassend:
Überwachen der Messungen des ersten Drehzahlsensors (5),
als Reaktion auf das Erkennen einer Fehlfunktion des ersten Drehzahlsensors (5), Durchführen einer Messung des zweiten Drehzahlsensors (7), und
Verwenden der Messung des zweiten Drehzahlsensors (7), um Messungen abzuleiten, die sich den Messungen annähern, die der erste Drehzahlsensor (5) erzeugen würde,
wobei nach dem Erkennen einer Fehlfunktion des ersten Drehzahlsensors (5) dem Bediener an der Bedienerschnittstelle (9) die Auswahl gegeben wird, den Betrieb des landwirtschaftlichen Systems (1) mit eingeschränkter Funktionalität fortzusetzen oder den Betrieb des landwirtschaftlichen Systems (1) einzustellen.

2. Verfahren nach Anspruch 1, wobei die erste rotierende Komponente (4) stromaufwärts der zweiten rotierenden Komponente (6) in einem Antriebsstrang des landwirtschaftlichen Systems (1) angeordnet ist, wobei die erste rotierende Komponente (4) und die zweite rotierende Komponente (6) drehbar miteinander verbunden sind.

3. Verfahren nach einem der vorstehenden Ansprüche, wobei sich sowohl die erste rotierende Komponente (4) als auch die zweite rotierende Komponente (6) an Bord einer ersten Einheit (2) des landwirtschaftlichen Systems (1) befinden, oder wobei sich nur die erste rotierende Komponente (4) an Bord der ersten Einheit (2) befindet und sich die zweite rotierende Komponente (6) an Bord einer zweiten Einheit (3) des landwirtschaftlichen Systems (1) befindet.

4. Verfahren nach Anspruch 3, wobei die erste Einheit (2) des landwirtschaftlichen Systems (1) ein selbstfahrendes landwirtschaftliches Fahrzeug ist, vorzugsweise eines von einem Mähdrescher, einem Feldhäcksler und einem Traktor, und wobei die zweite Einheit (3) des landwirtschaftlichen Systems (1) ein landwirtschaftliches Arbeitsgerät ist, vorzugsweise eine Ballenpresse, das mit der ersten Einheit (2) wirkverbunden ist und von dieser angetrieben wird.

5. Verfahren nach einem der vorstehenden Ansprüche, wobei der Bediener über die Bedienerschnittstelle (9) als Reaktion auf das Erkennen einer Fehlfunktion des ersten Drehzahlsensors (5) benachrichtigt wird.

6. Verfahren nach einem der vorstehenden Ansprüche, wobei die erste rotierende Komponente (4) und die zweite rotierende Komponente (6) durch ein Eingriffsmittel (10), vorzugsweise durch eine Kupplung oder einen Scherbolzen, drehbar miteinander in Eingriff und/oder außer Eingriff bringbar sind.

7. Verfahren nach einem der vorstehenden Ansprüche, wobei dem Bediener die Auswahl bezüglich des Betriebs des landwirtschaftlichen Systems (1) gegeben wird, wenn die Messungen des zweiten Drehzahlsensors (7) anzeigen, dass sich die zweite rotierende Komponente (6) dreht.

8. Verfahren nach Anspruch 7, wobei der Betrieb des landwirtschaftlichen Systems (1) nach dem Erkennen einer Fehlfunktion des ersten Drehzahlsensors (4) pausiert wird, bis der Bediener ausgewählt hat, den Betrieb des landwirtschaftlichen Systems (1) mit eingeschränkter Funktionalität fortzusetzen.

9. Verfahren nach einem der vorstehenden Ansprüche, wobei dem Bediener die Auswahl bezüglich des Betriebs des landwirtschaftlichen Systems (1) nicht gegeben wird, wenn die Messungen des zweiten Drehzahlsensors (7) anzeigen, dass sich die zweite rotierende Komponente (6) nicht dreht.

10. Verfahren nach einem der Ansprüche 6 bis 9, wobei, wenn der Bediener ausgewählt hat, den Betrieb des landwirtschaftlichen Systems (1) zu beenden, die erste rotierende Komponente (4) und die zweite rotierende Komponente (6) durch das Eingriffsmittel (10) voneinander außer Eingriff gebracht werden.

11. Verfahren nach einem der vorstehenden Ansprüche, wobei, wenn der Bediener ausgewählt hat, mit dem Betrieb des landwirtschaftlichen Systems (1) fortzufahren, dem Bediener über die Bedienerschnittstelle (9) Informationen in Bezug auf die eingeschränkte Funktionalität des landwirtschaftlichen Systems (1) angezeigt werden.

12. Landwirtschaftliches System (1), aufweisend:
eine erste rotierende Komponente (4) mit einem ersten Drehzahlsensor (5),
eine zweite rotierende Komponente (6) mit einem zweiten Drehzahlsensor (7),
eine Steuereinheit (8), die mit dem ersten Drehzahlsensor (5) und dem zweiten Drehzahlsensor (7) gekoppelt ist und eine Bedienerschnittstelle (9) für einen Bediener aufweist,
wobei die Steuereinheit (8) konfiguriert ist, um die Verfahrensschritte nach einem der vorstehenden Ansprüche auszuführen.

## Revendications

1. Procédé permettant de faire fonctionner un système agricole (1), le système agricole (1) ayant :
un premier composant rotatif (4) ayant un premier capteur de vitesse (5),
un second composant rotatif (6) ayant un second capteur de vitesse (7),
une unité de commande (8) couplée au premier capteur de vitesse (5) et au second capteur de vitesse (7) et ayant une interface utilisateur (9) pour un opérateur,
le procédé comprenant :
la surveillance des mesures du premier capteur de vitesse (5),
en réponse à la détection d'un dysfonctionnement du premier capteur de vitesse (5), la prise d'une mesure du second capteur de vitesse (7), et
l'utilisation de la mesure du second capteur de vitesse (7) pour obtenir des mesures qui se rapprochent des mesures que le premier capteur de vitesse (5) générerait,
dans lequel, après détection d'un dysfonctionnement du premier capteur de vitesse (5), l'opérateur sur l'interface utilisateur (9) a le choix entre continuer de faire fonctionner le système agricole (1) avec une fonctionnalité restreinte et arrêter le fonctionnement du système agricole (1).

2. Procédé selon la revendication 1, dans lequel le premier composant rotatif (4) est en amont du second composant rotatif (6) dans une transmission du système agricole (1), dans lequel le premier composant rotatif (4) et le second composant rotatif (6) sont reliés de manière rotative l'un à l'autre.

3. Procédé selon l'une des revendications précédentes, dans lequel le premier composant rotatif (4) et le second composant rotatif (6) sont tous deux intégrés à une première unité (2) du système agricole (1), ou dans lequel seul le premier composant rotatif (4) est intégré à la première unité (2) et le second composant rotatif (6) est intégré à une seconde unité (3) du système agricole (1).

4. Procédé selon la revendication 3, dans lequel la première unité (2) du système agricole (1) est un véhicule agricole automoteur, de préférence l'un parmi une moissonneuse-batteuse, une ensileuse et un tracteur, et dans lequel la seconde unité (3) du système agricole (1) est un outil agricole, de préférence une presse à balles, accouplée et entraînée de manière fonctionnelle par la première unité (2).

5. Procédé selon l'une des revendications précédentes, dans lequel l'opérateur est notifié par l'intermédiaire de l'interface utilisateur (9) en réponse à la détection d'un dysfonctionnement du premier capteur de vitesse (5).

6. Procédé selon l'une des revendications précédentes, dans lequel le premier composant rotatif (4) et le second composant rotatif (6) peuvent être mis en prise de manière rotative et/ou désolidarisés l'un de l'autre par un moyen de mise en prise (10), de préférence par un embrayage ou un boulon de cisaillement.

7. Procédé selon l'une des revendications précédentes, dans lequel l'opérateur a le choix concernant le fonctionnement du système agricole (1), si les mesures du second capteur de vitesse (7) indiquent que le second composant rotatif (6) tourne.

8. Procédé selon la revendication 7, dans lequel le fonctionnement du système agricole (1) est interrompu après la détection d'un dysfonctionnement du premier capteur de vitesse (4) jusqu'à ce que l'opérateur ait choisi de continuer de faire fonctionner le système agricole (1) avec une fonctionnalité restreinte.

9. Procédé selon l'une des revendications précédentes, dans lequel l'opérateur n'a pas le choix concernant le fonctionnement du système agricole (1), si les mesures du second capteur de vitesse (7) indiquent que le second composant rotatif (6) ne tourne pas.

10. Procédé selon l'une des revendications 6 à 9, dans lequel, si l'opérateur a choisi d'arrêter de faire fonctionner le système agricole (1), le premier composant rotatif (4) et le second composant rotatif (6) sont désolidarisés l'un de l'autre par le moyen de mise en prise (10).

11. Procédé selon l'une des revendications précédentes, dans lequel, si l'opérateur a choisi de continuer de faire fonctionner le système agricole (1), des informations en référence à la fonctionnalité restreinte du système agricole (1) sont affichées à l'opérateur par l'intermédiaire de l'interface utilisateur (9).

12. Système agricole (1) ayant :
un premier composant rotatif (4) ayant un premier capteur de vitesse (5),
un second composant rotatif (6) ayant un second capteur de vitesse (7),
une unité de commande (8) couplée au premier capteur de vitesse (5) et au second capteur de vitesse (7) et ayant une interface utilisateur (9) pour un opérateur,
dans lequel l'unité de commande (8) est configurée pour exécuter les étapes de procédé selon l'une quelconque des revendications précédentes.
